# EUROPÄISCHE PATENTSCHRIFT

(11) **EP 0 718 473 B1**
(45) Veröffentlichungstag und Bekanntmachung des Hinweises auf die Patenterteilung: **05.01.2000**
(21) Anmeldenummer: 95116960.6
(22) Anmeldetag: 27.10.1995
(51) Int. Cl.: F01L 1/047

(54) **Fertigungsverfahren für einen gesondert gefertigten Steuernocken, insbesondere einer gebauten Nockenwelle für Brennkraftmaschinen**
Manufacture process for a separately produced cam, in particular of a camshaft for internal combustion engines
Procédé pour la fabrication d'une came, en particulier d'un arbre à cames pour moteurs à combustion interne, produite séparément

(30) Priorität: 22.12.1994 DE 4446076
(43) Veröffentlichungstag der Anmeldung: 26.06.1996
(73) Patentinhaber: Bayerische Motoren Werke Aktiengesellschaft, 80788 München (DE)
(72) Erfinder: Fischer, Adolf, D-85540 Haar (DE)

(56) Entgegenhaltungen:
- DE-A- 2 336 241
- DE-A- 4 035 208
- GB-A- 2 153 388

## Beschreibung

Die Erfindung bezieht sich nach dem Oberbegriff des Patentanspruches 1 auf ein Fertigungsverfahren für einen gesondert gefertigten Steuernocken, insbesondere einer gebauten Nockenwelle für Brennkraftmaschinen.

Die DE-A 23 36 241 zeigt und beschreibt eine gebaute Nockenwelle, für die vorzugsweise eine hohle Profil- oder Rundwelle gewählt ist sowie insbesondere gesinterte oder schmiedegesinterte Steuernocken, weil diese auch bei komplizierten Formen so maßhaltig hergestellt werden können, daß sie ohne jede mechanische Nachbehandlung einbaufertig sind. Dieser angegebene Fertigungsvorteil konnte bislang bei gebauten Nockenwellen mit Sinternocken jedoch offensichtlich nicht genutzt werden, weil die Sinternocken nach der drehfesten Anordnung auf der jeweiligen Welle einem Schleifvorgang unterworfen wurden zur Erzeugung kinematisch einwandfreier, betriebsfähiger Umfangskonturen im Grundkreis- und Nockenbereich.

Weiter ist es aus der DE 40 35 208 bekannt, für eine gebaute Nockenwelle jeden Steuernocken in einem Mehrfachsinder verfahren betriebsfähig mit für geschliffene Steuernocken üblichen Maß- und Form- Fokranzen auszubilden.

Ein wesentlicher Grund für den bisher nicht erfolgten Einsatz nachbearbeitungsfreier Sinternocken dürfte unter anderem in der Verformung des Steuerelementes durch die fertigungsgebundene Prozeßwärme zu sehen sein. Da ein Steuernocken ein Bauteil mit ungleich verteilten Massen ist, ergibt sich daraus eine die fertige, betriebsfähige Umfangskontur besonders nachteilig beeinflussende Verformung, die z. B. beim Sintern und/oder Härten eines Steuernockens auftritt.

Bekanntlich kann ein Bauteil durch fertigungsgebundene Prozeßwärme ein Konizitäts- und Einfallverhalten, ein Schrumpfverhalten sowie einen Härteverzug aufweisen, wodurch diese einzeln oder im Zusammenwirken am Bauteil erhebliche Maß- und/oder Formabweichungen auslösen.

Aufgabe der Erfindung ist, das Fertigungsverfahren für einen Steuernocken mit fertiger, betriebsfähiger Umfangskontur im Grundkreis- und Nockenbereich so zu verbessern, daß eine Nachbearbeitung der Umfangskontur des Steuernockens aufgrund der fertigungsgebundenen Prozeßwärme entfällt.

Diese Aufgabe ist mit dem Patentanspruch 1 gelöst.

Die Erfindung nutzt in vorteilhafter Weise die Erkenntnis, daß bei Werkstoffen mit weitgehend homogenem, strukturfaserlosem Gefüge der Verzug bzw. die Verformung bei allen gleichartigen Bauteilen - wie beispielsweise den Steuernocken - entsprechend der Massenverteilung im wesentlichen identisch ist, so daß mit einer gezielt "falsch" bzw. maß- und/oder formabweichend gefertigten Umfangskontur diese durch die Prozeßwärme-Verformung des Steuernockens in eine betriebsfähige Umfangskontur im Nocken- und Grundkreisbereich umgeformt wird. Damit ist der Vorteil eines nachbearbeitungsfreien Steuernockens erreicht.

So wird gemäß Anspruch 1 für einen bevorzugt gesinterten oder schmiedegesinterten Steuernocken im einzemen vorgeschlagen, die äußere Umfangskontur des den Nockengrundkreis aufweisenden Ringteiles als Oval oder Ellipse zu gestalten mit einer zum Nockenteil des Steuernockens quer gerichteten Hauptachse, wobei über der Hauptachse diametrale, verläufige Oval- oder Ellipsen- Konturen des Ringteiles von der Grundkreiskontur nach außen gerichtet abweichen. Damit kann das durch die Prozeßwärme-Verformung in diesen Ringteilabschnitten bewirkte radial einwärts gerichtete Schrumpfen kompensiert werden. Da im weiteren die durch die im Nockenteil des Steuernockens gegebene Masse beeinflußte Verformung eine Streckung bzw. Längung des Steuernockens quer zur Oval- oder Ellipsen-Hauptachse auslöst, wird weiter kennzeichen gemäß vorgeschlagen, daß eine zum Nockenteil diametrale Oval- oder Ellipsen- Kontur des Ringteiles einwärts der Grundkreiskontur gerichtet abweicht. Zusätzlich wird der Nockenteil in seinem Spitzenbereich mit einem gegenüber der betriebsfähigen Umfangskontur insbesondere maßlich reduziertem Profil gefertigt.

Mit der vorgeschlagenen Oval- oder Ellipsen Form des den Nockengrundkreis aufweisenden Ringteiles ist bei genauer Einhaltung des jeweiligen Fertigungsverfahrens (Sintern, Härten) mit der Prozeßwärme-Verformung ein innerhalb kinematisch zulässiger Toleranzen kreisförmiger Ringteil erreicht und ferner eine, dem vorbestimmten Ventilerhebungsverlauf entsprechende Nockenkontur innerhalb zulässiger Abweichungen.

Um enge Toleranzen zu erreichen, wird gemaß Anspruch 2 vorgeschlagen, die "falsche" bzw. abweichend gestaltete Umfangskontur z. B. vor dem Härten mittels Kalibrierung, insbesondere durch Ziehkalbirierung des Steuernockens herzustellen.

Ein bezüglich seiner betriebsfähigen Umfangskontur durch Kalibrieren formgenau gefertigter Steuernocken ermöglicht weiter in vorteilhafter Weise nach Anspruch 3 auch eine kostengünstige Ausbildung des Nockenteils mit einem hohlen Flankenabschnitt. Derartige hohle Steuernocken bzw. Hohlnocken sind vorteilhaft für Ventiltriebe mit Rollenhebeln bzw. als Rollenabgriff.

Schließlich ist zur Erzielung eines nachbearbeitungsfreien Steuernockens von nicht unerheblicher Bedeutung, daß dieser über die durch die jeweilige Prozeßwärme-Verformung beim Sintern und/oder Härten erreichte betriebsfähige Umfangskontur in einer Maschinenvorrichtung nach Anspruch 4 aufgenommen wird zur drehgenauen Zuordnung der Durchbrechung zur Umfangskontur durch spanabhebende Endbearbeitung dieser Durchbrechung.

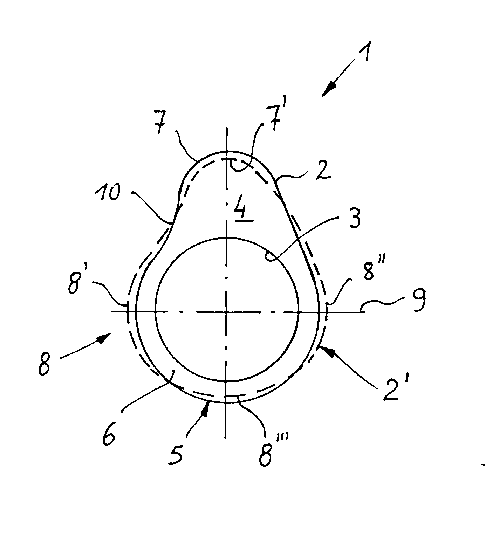

Die Erfindung ist anhand eines in der Zeichnung dargestellten Ausführungsbeispiels beschrieben. Die einzige Figur zeigt
- mit durchgezogener Line einen Steuernocken für eine gebaute Nockenwelle mit betriebsfähiger Umfangskontur und
- mit strichlierter Linie den Steuernocken mit "falscher" bzw. entsprechend der Prozeßwärme-Verformung abweichend gefertigter Umfangskontur.
Zur Verdeutlichung der Erfindung ist diese Umfangskontur gegenüber der betriebsfähigen Umfangskontur vergröbert dargestellt.

Ein Steuernocken 1 für eine nicht gezeigte, gebaute Nockenwelle einer Brennkraftmaschine weist eine mittels durchgezogener Linie veranschaulichte betriebsfähige Umfangskontur 2 auf sowie eine Durchbrechung 3 zur drehfesten Anordnung auf der jeweiligen, den Steuernocken 1 aufnehmenden Welle. Die Durchbrechung 3 ist begrenzt von einem Nockenteil 4 und von einem mit diesem verbundenen, einen Nockengrundkreis 5 aufweisenden Ringteil 6. Der Steuernocken 1 ist vorzugsweise schmiedegesintert und wird zur Steigerung der Verschleißfestigkeit gehärtet. Da der Steuernocken 1 mit dem am Ringteil 6 angeordneten Nockenteil 4 eine für dieses mit Prozeßwärme verbundene Fertigungsverfahren ungünstige Massenverteilung aufweist, ist mit einer nachteiligen Verformung einer betriebsfähig gefertigten Umfangskontur 2 zu rechnen. Wie Versuche zeigten, führt das Sintern mit anschließendem Härten des Steuernockens 1 zu einer Verformung bzw. zu einem Verzug, wobei der Ringteil 6 über seinen Durchmesser quer zum Nockenteil 4 reduziert wird bzw. radial schrumpft, wogegen der Steuernocken 1 in Richtung der Nockenspitze 7 und dazu diametral über einen Abschnitt des Ringteiles 6 in der Länge größer wird.

Um nach dem Sintern und Härten des Steuernockens 1 eine Nachbearbeitung seiner Umfangskontur zu vermeiden, wird der Steuernocken 1 erfindungsgemäß mit einer derart durch Maß- und Formabweichungen gestalteten, mittels des strichlierten Linienzuges dargestellten Umfangskontur 2' gefertigt, daß diese Umfangskontur 2' durch eine Prozeßwärme-Verformung des Steuernockens 1 bedingt in die betriebsfähige Umfangskontur 2 nachbearbeitungsfrei umgeformt wird.

Für einen schmiedegesinterten Steuernocken 1 hat sich bezüglich des Fertigungsaufwandes als vorteilhaft erwiesen, die äußere, "falsche" Umfangskontur 2' des Ringteiles 6 als ein stetige Übergänge aufweisendes Oval 8 mit quer zum Nockenteil 4 gerichteter Hauptachse 9 zu gestalten. Zusätzlich ist der Nockenteil 4 in seinem Spitzenbereich 7 mit einem gegenüber der betriebsfähigen Umfangskontur 2 insbesondere maßlich reduziertem Profil 7' gefertigt. Wie die einzige Figur weiter verdeutlicht, ist der zunächst außenumfänglich oval gefertigte Ringteil 6 aus solchen, einerseits stetig an den Nockenteil 4 angrenzenden und andererseits stetig ineinander übergehenden Kreisbögen gebildet, daß über der Hauptachse 9 diametrale Ovalkonturen 8' und 8" des Ringteiles 6 von der Grundkreiskontur 5 nach außen gerichtet abweichen und daß eine weitere, zum Nockenteil 4 diametrale Ovalkontur 8"' des Ringteiles 6 einwärts der Grundkreiskontur 5 gerichtet abweicht. Mit dieser durch den gestrichelten Linienzug dargestellten, absichtlich durch vorbestimmte Maß- und Formabweichungen "falsch" gefertigten Umfangskontur 2' ist nach dem Sintern und Härten sichergestellt, daß diese Umfangskontur 2' bei genauer Einhaltung des Fertigungsverfahrens durch den Wärmeverzug in die nachbearbeitungsfreie, betriebsfähige Umfangskontur 2 umgeformt wird. Die maximalen Maßabweichungen der "falschen" Umfangskontur 2' von der betriebsfähigen Umfangskontur 2 können bei einem für Pkw-Motoren üblichen Steuernocken 1 z. B. zwischen 0,01 und 0,05 mm betragen.

Zur Erzielung enger Toleranzen an der durch Wärmeverzug nachbearbeitungsfrei umgeformten Umfangskontur 2 ist die "falsche" bzw. abweichend gestaltete Umfangskontur 2' nach dem Sintern und vor dem Härten vorzugsweise durch Ziehkalibrieren des Steuernockens 1 gefertigt. Diese Fertigung hat weiter den Vorteil, den Steuernocken 1 für das Zusammenwirken mit einem Rollenhebel im Nockenteil 4 mit einem hohlen Flankenabschnitt 10 ausbilden zu können.

Um schließlich auch bei einem auf der Welle drehfest angeordneten Steuernocken 1 eine auf die Drehachse der Welle bezogene Nacharbeit der Umfangskontur 2 zu vermeiden, ist der Steuernocken 1 über die betriebsfähige Umfangskontur 2 in einer Maschinenvorrichtung aufgenommen zur drehgenauen Zuordnung der Durchbrechung 3 zur Umfangskontur 2 durch spanabhebende Endbearbeitung der Durchbrechung 3. Anschließend wird der Steuernocken 1 auf einem vorzugsweise spitzenlos geschliffenen Rohr aufgeschrumpft, das mit sämtlichen Steuernocken 1 und einem Antriebsflansch eine gebaute Nockenwelle bildet.

Für einen mit einem Stößel zusammenwirkenden Steuernocken 1 kann dieser zur Erzeugung einer gewünschten Stößeldrehbewegung eine vorbestimmte Konizität aufweisen, die bei der erfindungsgemäßen Fertigung des Steuernockens 1 im Rahmen der Erzeugung der "falschen" Umfangskontur 2' entsprechend berücksichtigt wird.

Das erfindungsgemäße Fertigungsverfahren ist auch geeignet für andere Steuernocken, wie z. B. für Kompressoren, für Webmaschinen, für Kurvensteuergetriebe etc.

## Patentansprüche

1. Fertigungsverfahren für einen gesondert gefertigten Steuernocken, insbesondere einer gebauten Nockenwelle für Brennkraftmaschinen, wobei der eine Durchbrechung (3) zur Wellenverbindung aufweisende Steuernocken (1) mit einer betriebsfähigen Umfangskontur (2) durch Sintern und Sinterschmieden gefertigt wird, und
- die Durchbrechung (3) des Steuernockens (1) von einem Nockenteil (4) und von einem mit diesem verbundenen, einen Nocken-Grundkreis (5) aufweisenden Ringteil (6) begrenzt ist,
**dadurch gekennzeichnet,**
- daß der Steuernocken (1) in einem Zwischenstadium des Sinter- oder Schmiedesinter-Verfahrens mit einer durch Maß- und/oder Formabweichungen vorläufigen Umfangskontur (2') gefertigt wird, wobei
- diese Umfangskontur (2') im Bereich des Ringteiles (6) als ein Oval (8) oder als eine Ellipse gefertigt wird mit jeweils quer zum Nockenteil (4) gerichteter Hauptachse (9), über der
- diametrale Oval- oder Ellipsen-Konturen (8', 8") des Ringteiles (6) von der Grundkreiskontur (5) nach außen gerichtet abweichen und
- eine zum Nockenteil (4) diametrale Oval- oder Ellipsenkontur (8"') des Ringteiles (6) einwärts der Grundkreiskontur (5) gerichtet abweicht, und
- ferner der Nockenteil (4) in seinem Spitzen-Bereich (7) gegenüber der betriebsfähigen Umfangskontur (2) durch ein maßlich reduziertes Profil (7') abweicht, wobei
- die durch die Abweichungen (8', 8", 8"', 7') gebildete vorläufige Umfangskontur (2') durch Prozeßwärme-Verformung des Steuernockens (1) bedingt in die betriebsfähige Umfangskontur (2) nachbearbeitungsfrei umgeformt wird.

2. Fertigungsverfahren nach Anspruch 1, **dadurch gekennzeichnet**, daß die abweichend gestaltete Umfangskontur (2') mittels Kalibrieren, insbesondere Ziehkalibrieren des Steuernockens (1) gefertigt wird.

3. Fertigungsverfahren nach Anspruch 1 oder 2, **dadurch gekennzeichnet**, daß der Nockenteil (4) mit einem hohlen Flankenabschnitt (10) gefertigt wird.

4. Fertigungsverfahren nach einem der Ansprüche 1 bis 3, **dadurch gekennzeichnet**, daß der Steuernocken (1) über die betriebsfähige Umfangskontur (2) in einer Maschinenvorrichtung aufgenommen wird zur drehgenauen Zuordnung der Durchbrechung (3) zur Umfangskontur (2) durch spanabhebende Endbearbeitung der Durchbrechung (3).

## Claims

1. A method of producing a separately-produced control cam, especially a built-up camshaft for internal combustion engines, wherein the control cam (1), which is formed with an aperture (3) for joining to the shaft, is given an operational peripheral contour (2) by sintering and/or forging and
- the aperture (3) in the control cam (1) is bounded by a cam part (4) and by an annular part (6) connected to the cam part and comprising a cam base circle (5),
**characterised in that**
- in an intermediate stage of the sintering and/or forging process the control cam (1) is given a provisional peripheral contour (2') which deviates in dimensions and/or shape, wherein
- in the region of the annular part (6) the peripheral contour (2') is produced in the form of an oval (8) or an ellipse, in each case with its major axis (9) extending transversely to the cam part (4), and
- across the major axis (9), diametral oval or elliptical contours (8', 8") of the annular part (6) deviate outwards from the base circle contour (5) and
- a diametral oval or elliptical contour (8"') of the annular part (6) towards the cam part (4) deviates inwardly from the base circle contour (5), and
- also the tip region (7) of the cam part (4) has a dimensionally reduced profile (7') which deviates from the operational peripheral contour (2), wherein
- the temporary peripheral contour (2') formed by the deviations (8', 8", 8"', 7') is under certain conditions converted by the heat of the process of shaping the control cam (1) into the operational peripheral contour (2) without further machining.

2. A method of production according to claim 1, **characterised in that** the deviant-shaped peripheral contour (2') is produced by calibration, especially by drawing and calibrating the control cam (1).

3. A method of production according to claim 1 or claim 2, **characterised in that** the cam part (4) is produced with a hollow flank portion (10).

4. A method of production according to any of claims 1 to 3, **characterised in that** the control cam (1) is secured in a machine via the operational peripheral contour (2) in order to associate the aperture (3) at the correct angle to the peripheral contour (2) by final machining of the aperture (3).

## Revendications

1. Procédé de fabrication d'une came de commande fabriquée séparément, notamment destinée à un arbre à cames construit, appliqué à un moteur à combustion interne, la came de commande (1) ayant un passage (3) pour son montage sur l'arbre, en étant fabriquée avec un contour périphérique (2), fonctionnel, par frittage et frittage-forgeage, et
- le passage (3) de la came de commande (1) est délimité par une partie de came (4) et par une partie annulaire (6) reliée à la partie de came et ayant un cercle de base de came (5),
caractérisé en ce que
- la came de commande (1) est fabriquée, dans un stade intermédiaire du procédé de frittage ou de frittageforgeage, avec un contour périphérique (2') provisoire, ayant des différences de dimension et/ou de forme,
- ce contour périphérique (2') comporte, au niveau de la partie annulaire (6), un ovale (8) ou une ellipse dont l'axe principal (9) est dirigé transversalement par rapport à la partie de came (4), et
- les contours (8', 8") de l'ovale ou de l'ellipse, dans la direction diamétrale de la partie annulaire (6), sont différents du contour du cercle de base (5), et dirigés vers l'extérieur et,
- un contour d'ovale ou d'ellipse (8"') diamétral par rapport à la partie de came (4) de la partie annulaire (6), différent, est dirigé vers l'intérieur du contour du cercle de base (5) et,
- la partie de came (4) diffère dans sa zone de pointe (7) par rapport au contour périphérique fonctionnel (2), selon un profil (7') réduit en dimension,
- le contour périphérique (2') provisoire formé par les déviations (8', 8", 8"', 7') est transformé par déformation par chaleur de procédé de la came de commande (1), pour donner le contour périphérique (2) fonctionnel, ne nécessitant pas d'usinage de finition.

2. Procédé de fabrication selon la revendication 1,
caractérisé en ce que
le contour périphérique (2') de forme différente, est fabriqué par calibrage, notamment par calibrage étirage de la came de commande (1).

3. Procédé de fabrication selon la revendication 1 ou 2,
caractérisé en ce que
la partie de came (4) est fabriquée avec un segment de flanc creux (10).

4. Procédé de fabrication selon l'une des revendications 1 à 3,
caractérisé en ce que
la came de commande (1) est reçue dans un dispositif de machine par un contour périphérique fonctionnel (2) pour associer de manière précise en rotation, le passage (3) au contour périphérique (2), par un usinage final avec enlèvement de copeaux appliqué au passage (3).
